# EUROPEAN PATENT APPLICATION

(11) **EP 4 725 709 A1**
(43) Date of publication of application: **15.04.2026**
(21) Application number: 24206162.0
(22) Date of filing: 11.10.2024
(51) Int. Cl.: B41J 2/21, B41J 11/00, B41J 25/308, H04N 1/54

(54) **METHOD FOR INCREASING A MAXIMAL GLOSS RANGE IN PRINTING AND A FLATBED PRINTER THEREFOR**

(71) Applicant: Canon Production Printing Holding B.V., 5914 HH Venlo (NL)
(72) Inventor: WEIJKAMP, Clemens T., Venlo (NL); REJHONS, Camiel A. C., Venlo (NL)
(74) Representative: Canon Production Printing IP Department

(57) **Abstract**

A method for a printer (5) comprising a medium support surface (11) for supporting the print media, a print head assembly for ejecting colour inks (CMYKW) and varnish ink (V) forming a print on the print media and a print controller for controlling the printing of images on the print media in multiple layers. The print job comprises a colour image, a height image with height information per pixel of the colour image and a gloss image with gloss information per pixel of the colour image. The print head assembly subsequently prints the elevation layers, the anti-contouring layers, the white layers, the at least one colour ink layer and the at least one overcoat layer on the print media. The print controller creates multiple inverse anti-contouring layers, wherein each pixel value of the multiple inverse anti-contouring layers is a complementary value of the corresponding pixel in the anti-contouring layers with respect to a maximum of ink pixels determined to be printed on top of each other in the anti-contouring layers. The print head assembly prints the multiple inverse anti-contouring layers between the at least one colour ink layer and the at least one overcoat layer.

## Description

### BACKGROUND OF THE INVENTION

### 1. Field of the invention

The invention relates to a method for a UV curable printer comprising a medium support surface for supporting the print media, a print head assembly for ejecting UV curable colour inks, white inks and varnish ink forming a print on the print media and a print controller for controlling the printing of images on the print media in multiple layers, the method comprising the steps of the print controller receiving a print job comprising a colour image, a height image with height information per pixel of the colour image and a gloss image with gloss information per pixel of the colour image, the print controller determining elevation layers to get a height per pixel according to the height image, the print controller determining anti-contouring layers to avoid contouring artefacts in the print, the print controller determining white layers to be a base for printing the colour image, the print controller determining at least one colour ink layer for printing the colour image, the print controller determining at least one overcoat layer of varnish ink for printing on top of the at least one colour ink layer, and the print head assembly subsequently printing the elevation layers, the anti-contouring layers, the white layers, the at least one colour ink layer and the at least one overcoat layer on the print media.

### 2. Description of Background Art

In prints created with UV curable inks the gloss level of the prints depend on the following factors: type of ink, coverage and number of passes. The type of ink may result in prints with a level of gloss varying from a gloss level of 5 gloss units (at 60 degree) to approximately a gloss level of 25 gloss units (at 60 degree). In high coverage areas like black a lot of ink is used and a closed ink film is formed which results in a higher gloss. In low coverage areas like light grey, single dots are printed. This results, when printed on a mat paper, in a much lower gloss. Usually a print is built up in a number of passes. The ink is cured after every pass. A high number of passes results in a low average coverage per pass thus in a lower gloss.

UV curable printers typically offer a "spot gloss" mode. After printing the colour inks a varnish overcoat is (locally) printed in a separate print step. To obtain very high gloss the curing lamps are switched off. The varnish droplets will flow together and form a glossy closed film. In a separate "print layer" the ink is cured. There are several disadvantages of this method. Firstly, it takes three separate print layers (colour, varnish with lamps off, curing). Secondly, the non cured varnish ink film can be touched, especially in an "open" system like a flatbed printer. Thirdly, the non cured varnish ink layer is very sensitive to small dust particles. "Fish eye" artifacts might become visible. In elevated printing applying a gloss overcoat in a separate print has another important disadvantage and limitation. The print head height during printing of the varnish overcoat has to be adjusted to the highest point of the elevated print to avoid head touches. The gap between the print heads and the lower areas of the elevated print will be increased. This results in dot positioning errors and appearance of satellites and mist. Satellites and mist lead to a matte haze in the print and to printer pollution.

### SUMMARY OF THE INVENTION

It is an object of the invention to provide a method to create elevated prints with an equal gloss, prints with a defined gloss and prints with matte / gloss effects using UV curable inks.

In accordance with the present invention, the method comprises the steps of the print controller creating multiple inverse anti-contouring layers, wherein each pixel value of the multiple inverse anti-contouring layers is a complementary value of the corresponding pixel in the anti-contouring layers with respect to a maximum of ink pixels determined to be printed on top of each other in the anti-contouring layers, and the print head assembly printing the multiple inverse anti-contouring layers between the at least one colour ink layer and the at least one overcoat layer.

According to an embodiment the method comprises the step of splitting the at least one colour ink layer into multiple colour ink layers. The colour ink layer is split into n layers (n = 2,3,4,...). By doing so, a maximum amount of ink per cure pass is reduced with a factor n; as a result the gloss of the print becomes more equal and more matte. If, in the same job, a varnish overcoat of at least one layer is printed on top the gain in gloss is limited. Therefor, after printing the n colour layers the multiple inverse anti-contouring layers are printed. As a result the varnish overcoat is printed in the original number of passes, a high amount of varnish is printed per pass, a significant increase of gloss is obtained and the total matte-gloss range is increased.

According to an embodiment the method comprises the step of the print head assembly printing pixels in the anti-contouring layers with no ink, white ink, varnish ink or colour ink. Optional a white cover layer is printed. By printing anti-contouring layers the (optional) white cover layer and colour layer are spit up in multiple layers. In the inverse anti-contouring layers typically "empty" pixels i.e. no ink droplets, varnish ink or even appropriate colour ink are printed. In the last layer or layers varnish ink droplets can be printed to create a glossy overcoat layer.

According to an embodiment the method comprises the step of printing pixels in the multiple inverse anti-contouring layers with no ink, with the varnish ink or with an appropriate colour ink. When colour ink droplets are printed the colour preferably corresponds with the colour of the colour pixel in the colour layer below the inverse anti-contouring layer.

According to an embodiment the method comprises the step of printing the pixels in multiple anti-contouring layers and/or in the inverse anti-contouring layers at least partially with no ink droplets such that the print has an approximately equal surface.

According to an embodiment the method comprises the step of determining the number of anti-contouring layers and the number of overcoat layers in order to let a gloss of the print match the gloss information of each pixel of the gloss image.

The experiments done by the inventors clearly show the advantages of using a combination of anti-contouring layers before printing colour and the inverse anti-contouring layers after printing colour but before printing the (varnish) overcoat. With the method according to the present invention the gloss variation between colours is reduced. The inverse anti-contouring layers make it possible to increase the gloss level with a varnish overcoat. The possible gloss range is therefore increased at both range ends.

The final gloss level can be set by tuning the amount of varnish overcoat, i.e. the number of overcoat layers and the amount of ink per overcoat layer. A low amount of varnish overcoat results in a (more) matte print. A high amount of varnish overcoat, especially if multiple layers of varnish overcoat are printed, results in prints with a high gloss level. Matt / gloss effects in a same print can be obtained by printing the varnish overcoat in specific areas only. The location can be defined in a "spot layer" that contains the information where varnish must be applied.

By applying multiple colour ink layers the print time is increased. However, usually multipass print modes are required to obtain mask nozzle failure and other banding effects. Splitting up the colour layer into multiple colour ink layers gives a similar improvement. So, with splitting up the original colour layer into multiple colour ink layers it is possible to print in less passes and the productivity decrease will be significantly reduced. For example, when a default a colour print is made in 6 pass mode, with a split of the original colour ink layer into 3 layers, the same print quality can be obtained in a 2 pass mode: Colour inks are is printed in 3 layers x 2 passes = 6 passes.

Since the multiple inverse anti-contouring layers are the inverse of the multiple anti-contouring layers, the use of the inverse anti-contouring layers does not result in additional layers.

The split of the original colour layer into multiple colour ink layers lowers the maximum gloss of a print and reduces the gloss differences between low and high coverages in the colour prints. The inverse anti-contouring layers make it possible to print the varnish overcoat with a high amount of ink, which results in a high gloss. The combination of split of the original colour ink layer into the multiple colour ink layers and the inverse anti-contouring layers makes it possible to create matt / gloss effects with a sufficient gloss range. Additional advantage for elevated printing is that the optimal distance between the print head and the print can be maintained during printing. No alignment issues, no satellite issues and no mist issues occur. Additional advantage is that the colour images can be printed in less passes while maintaining sufficient print quality. In this way the productivity loss due to the split of the original colour ink layer is limited.

According to an embodiment the preferred number of inverse anti-contouring layers equals the number of anti-contouring layers. By doing so, optimal results are achieved. The number of anti-contouring layers may be varied per print.

The present invention also relates to a UV curable printer comprising a medium support surface for supporting print media to be printed upon, a print head assembly for ejecting colour inks and varnish ink forming a print on the print media and a print controller for controlling the printing of a colour image on the print media in multiple layers as to form the print, wherein the print controller is configured to perform the steps of a method according to the present invention.

The present invention relates to a non-transitory software medium comprising executable program code configured to, when executed on a print controller of a printer, enable the print controller to perform the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic perspective view of a UV curable printer;
Fig. 2 is a table with gloss ranges for two different inks and for the steps of the method according to the present invention;
Fig. 3 is a graph showing a relation between the gloss level of a print and the thickness of the varnish ink overcoat layers;
Figs. 4-5 are schematic drawings of methods according to the prior art;
Fig. 6 is a schematic drawings of the method according to the present invention;
Fig. 7 is an example of a schematic drawing of anti-contouring layers and inverse anti-contouring layers according to the present invention;
Fig. 8 is an example of a layer built up of an elevated print according to the present invention;
Fig. 9 is a schematic flow diagram of the method according to the present invention; and
Fig. 10 is a schematic drawing of the recording medium according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

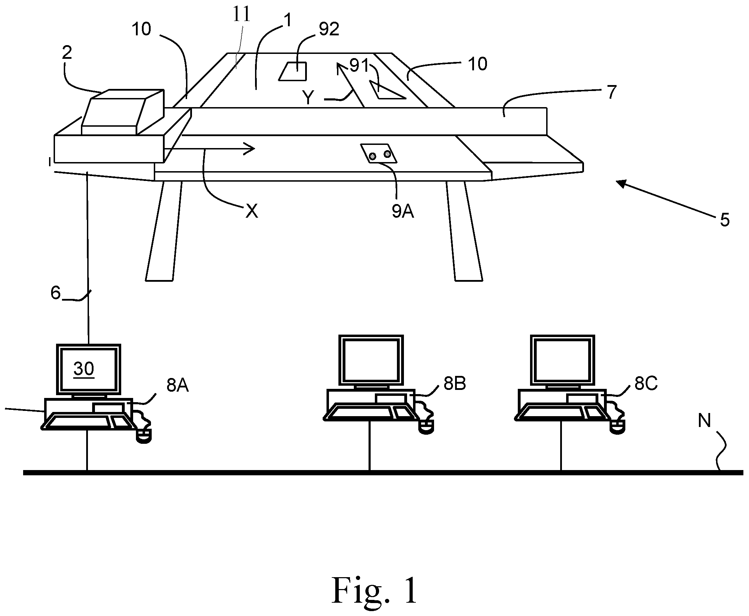

Fig. 1 is a UV curable printer 5 comprising a number of workstations 8B, 8C, which may be personal computers or other devices for preparing image data for prints to be printed. These workstations have access to a network N for transferring print jobs comprising the image data to a print controller 8A that is configured to receive the print jobs for prints and derive pass images. The print controller 8A may be part of the printer 5 connected to a control unit of the printer 5 via a connection 6. The printer 5 further comprises a print head assembly 2 attached to an armature 7 for applying UV curable colorants, for example cyan (C), magenta (M), yellow (Y), black (K) and white (W) colorant, or varnish ink to pieces 9, 9A of print media placed on a flat bed surface 1 in order to obtain a printed image. The armature 7 may comprise a gantry above the flat bed surface 1 as shown in Fig. 1 or a robot arm (not shown) moving in a plurality of directions over the flat bed surface 1. The flat bed surface 1 is at least partially reachable by the print head assembly 2. The pieces of media may be so small that they are completely placed on the flat bed surface 1, but a piece of media which is larger than the medium support surface, in which case an image which is going to cover the whole piece of media must be printed into a plurality of parts of the image, is not excluded. A first piece 9A has already been printed upon, while the other pieces 91, 92 are not provided with any recording material yet. The print head assembly 2 reciprocally scans the flat bed surface 1 in the second direction X along a gantry 7 perpendicular to a first direction Y of the gantry 7 over the flat bed surface 1 along guiding parts 10. During printing of an image on the piece 9, 9A of media the piece 91, 92, 9A of media may not be moved on the flat bed surface 1. This way of working is advantageous for rigid print media. A print head which is as wide as the medium support surface may also be envisaged within the scope of the invention. Such a print head may be moveable relatively to the print media in at least one direction over the flat bed surface 1.

The flat bed surface 1 comprises a medium support surface 11. The medium support surface 11 is provided with through-holes to allow air to pass through the medium support surface 11. A pressure chamber (not shown) is provided below medium support surface 11 as part of a suction chamber assembly. By applying a negative pressure in the pressure chamber, print media can be securely and flatly held against the medium support surface 11.

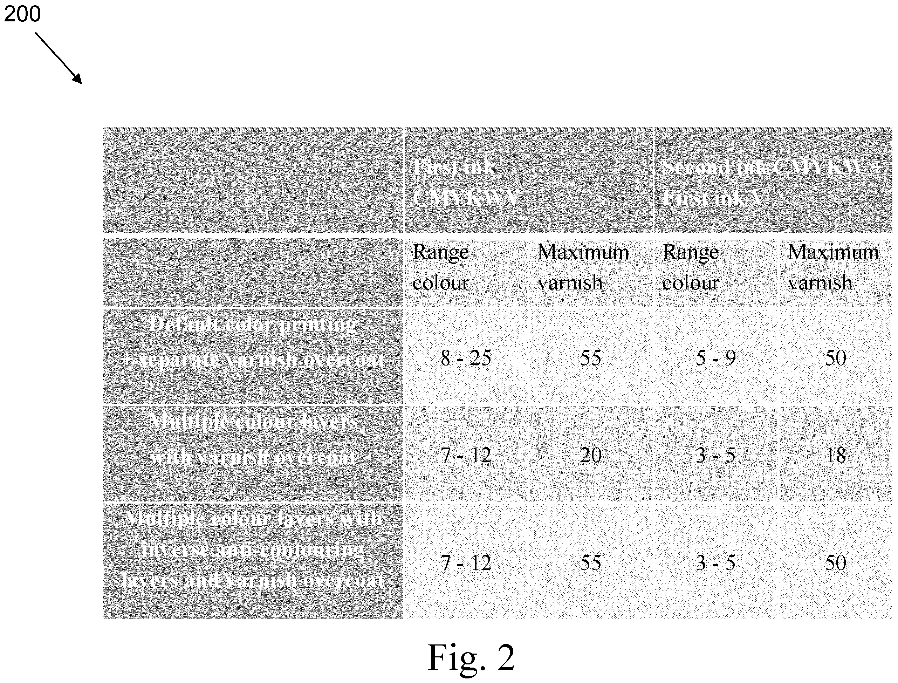

Fig. 2 is a table 200 with gloss ranges for two different inks and for the steps of the method according to the present invention. The gloss levels in the table 200 are gloss levels (60 degree) measured on prints without and with multiple anti-contouring layers, resulting in respectively prints with colour printed in one and multiple layers. Also shown are measurement results of prints with multiple anti-contouring layers printed before printing colour and prints with a combination of multiple anti-contouring before and inverse anti-contouring layers after printing colour, and with overcoat layers of varnish ink.

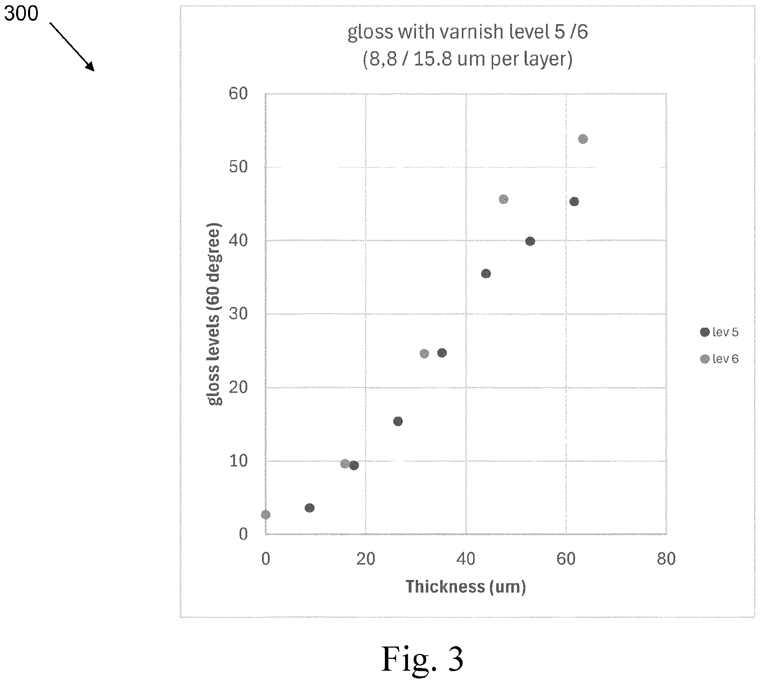

Fig. 3 is a graph 300 showing a relation between the gloss level of a print and the thickness of the varnish ink overcoat layers. The final gloss level can be set by tuning the amount of varnish overcoat. A low amount of varnish overcoat results in a (more) matte print. A high amount of varnish overcoat, especially if multiple layers of varnish overcoat are printed, results in prints with a high gloss level. This is shown in Fig. 3. In a "spot layer" the location and the amount of varnish that must be applied on that locations is defined. The "spot layer" contains grey scale information: white = no varnish, black = maximum amount of varnish.. Matt / gloss effects can be obtained by printing the varnish overcoat in specific areas only.

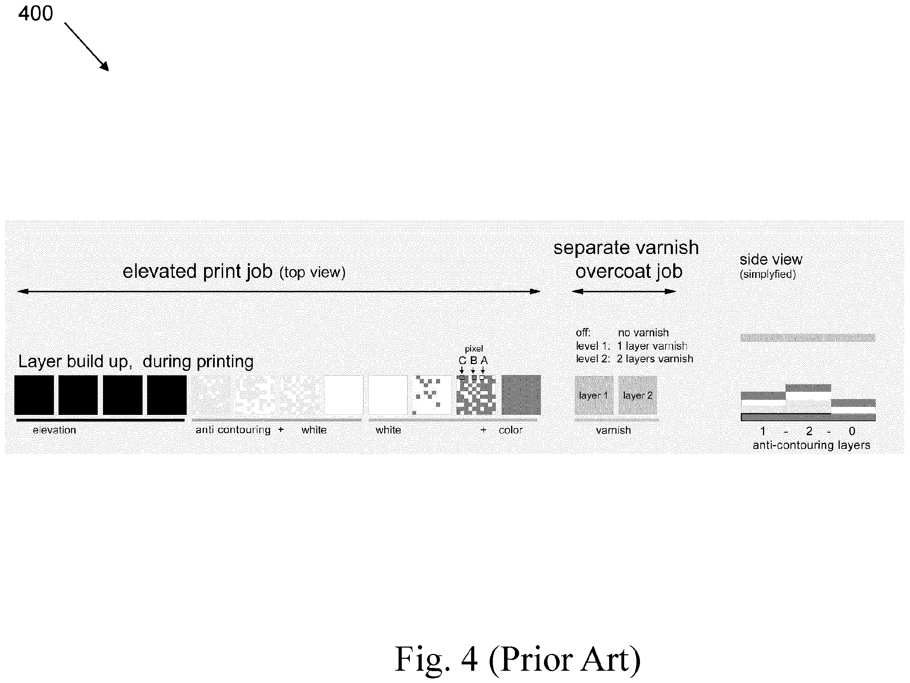

Figs. 4 - 5 are schematic drawings of methods according to the prior art. Fig. 4 shows a diagram 400 of an elevated print job and a separate varnish overcoat job. The varnish ink is applied to the print which already comprises black elevation layers, anti-contouring layers, white layers and colour layers. On the right side of Fig. 4 the number of layers is shown to be deposited on top of each other.

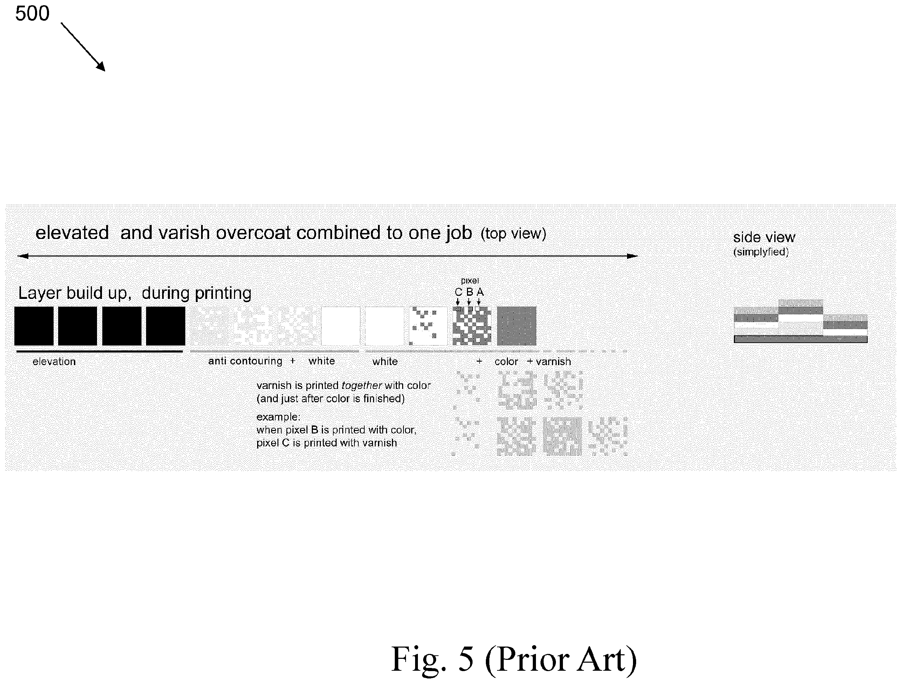

In Fig. 5 an elevated print job and a varnish overcoat print job are combined into one print job 500. The varnish ink is mostly printed together with a colour ink in the same layer due to the height differences. This is disadvantageous since the varnish ink is not applied in one layer, but in several layers, which does not give a closed varnish overcoat and no or a limited increase of gloss.

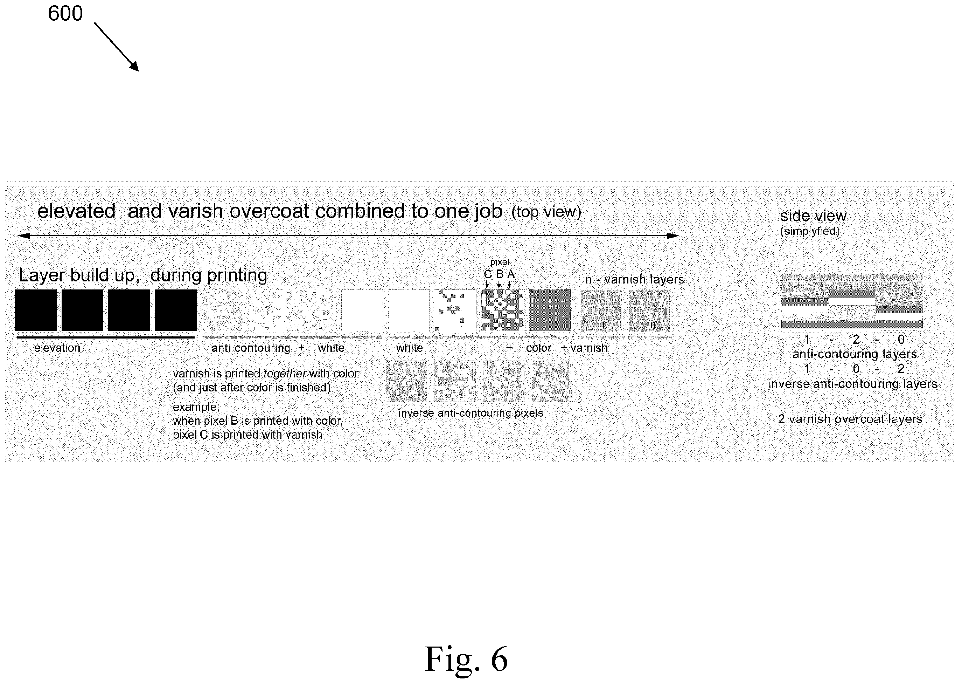

Fig. 6 is an example of a schematic drawings of the method according to the present invention. In Fig. 6 an elevated print job and a varnish overcoat print job are combined into one print job 600. However, in contrast with the prior art example shown in Fig. 5, now there is multiple inverse anti-contouring layers are printed and the varnish ink can be deposited in one or more "closed" layers which leads to a higher gloss level, i.e. the gloss level range is increased significantly. On the right side of Fig. 6 the number of layers is shown to be deposited on top of each other, no ink, white ink or varnish ink in the anti-contouring layers and no ink or varnish ink in the inverse anti-contouring layers add up to - in this example - 2 additional layers. The print controller creates multiple inverse anti-contouring layers, wherein each pixel value of the multiple inverse anti-contouring layers is a complementary value of the corresponding pixel in the anti-contouring layers with respect to a maximum of - in this example two - ink droplets per pixel determined to be printed on top of each other.

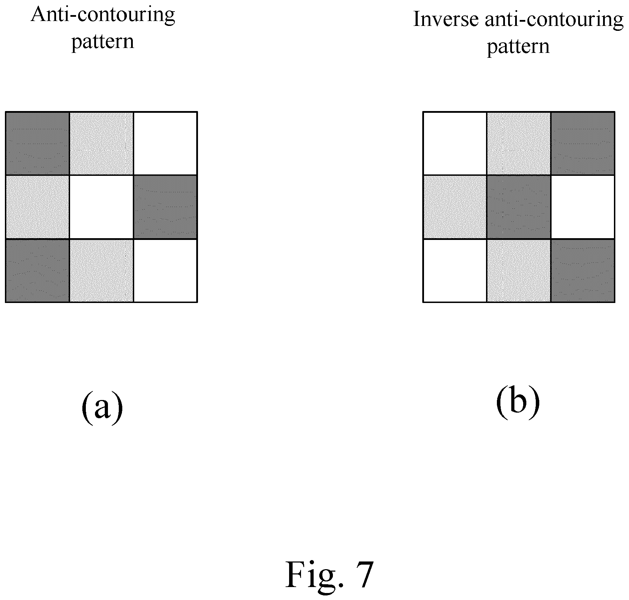

Fig. 7(a) - 7(b) is an example of a pattern of a matrix of anti-contouring pixels and inverse anti-contouring pixels according to the invention. Fig. 7(a) shows an example of an anti-contouring pattern of 3 by 3 pixels represented as squares with three levels. Fig. 7(b) shows an example of an inverse anti-contouring pattern of 3 by 3 pixels represented as squares with three levels. In Fig 7(a) as well as in Fig. 7(b) the white pixels are printed with no ink. The light grey pixels are printed in one layer and the dark grey pixels are printed in 2 layers. The number of anti-contouring layers may be varied. An optimal result is achieved when the number of anti-contouring layers equals the number of inverse anti-contouring layers.

For convenience reasons the patterns in Fig. 7(a) - 7(b) are 3 by 3. However, a larger matrix gives a better result, for example 256 by 256.

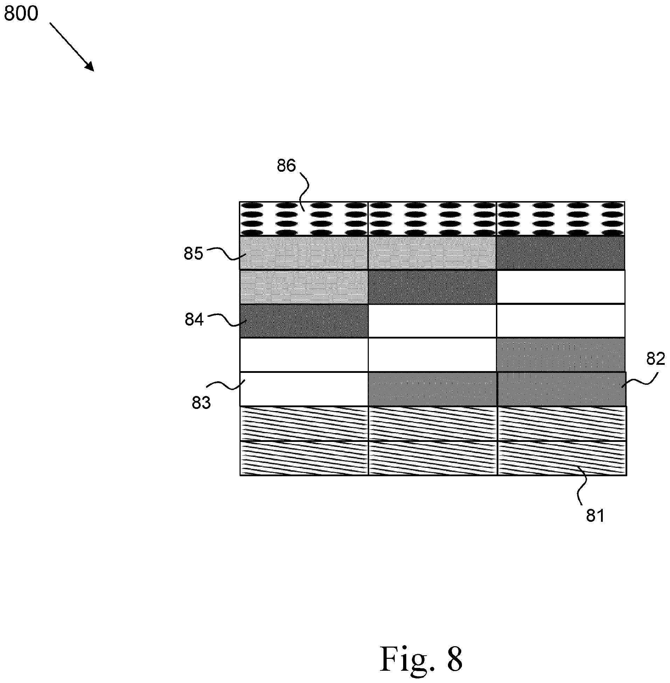

Fig. 8 is an example of a layer built up of an elevated print according to the present invention. First of all elevation layers 81 are printed. The number of elevation layers depends on the elevation height of the print. The elevation layers 81 may be varnish ink, white ink, colour inks or a combination of said inks. Then anti-contouring pixels 82 are printed in 2 layers. The anti-contouring pixels 82 comprise no ink, white ink or colour ink. Then white 83 is printed. Then colour 84 is printed divided over 3 layers. Then two inverse anti-contouring pixels 85 are printed in 2 layers. The inverse anti-contouring pixels 85 comprise no ink, white ink or colour ink. Then one varnish ink layer 86 is printed. Typically one to four varnish layers are printed.

In an alternative embodiment at least a part of the last elevation layer is used to fill in the anti-contouring pixels.

In an alternative embodiment at least part of the colour layers are used to fill in the inverse anti-contouring pixels.

In Fig. 8 elevation is built up in two elevation layers. In this Fig 8 each elevation pixel has the same height, however each elevation pixel may have a different height. The different heights are indicated per pixel in the height image in the print job.

In Fig. 8 the colour thickness equals 1 ink layer. However, since anti-contouring layers are used, colour is divided over 3 print layers. In this way a lower gloss is reached.

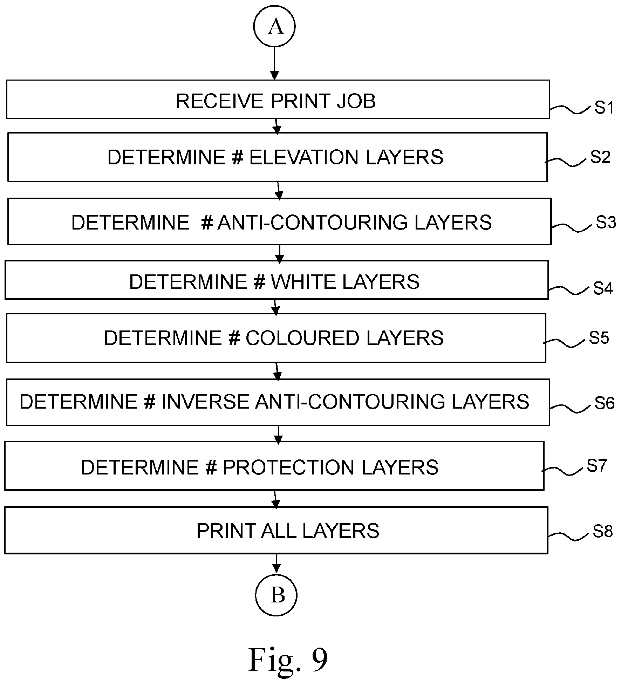

Fig. 9 is an example of a flow diagram of the method according to the present invention. The method starts in a starting point A which leads to a first step S1.

In the first step S1 the print controller receives a print job comprising a colour image, a height image with height information per pixel of the colour image and a gloss image with gloss information per pixel of the colour image.

In a second step S2 the print controller determines elevation layers to get a height per pixel according to the height image.

In a third step S3 the print controller determines anti-contouring layers to avoid contouring artefacts in the print.

In a fourth step S4 the print controller determines white layers to be a base for printing the colour image.

In a fifth step S5 the print controller determines at least one colour ink layer for printing the colour image.

In a sixth step S6 the print controller creates multiple inverse anti-contouring layers, wherein each pixel value of the multiple inverse anti-contouring layers is a complementary value of the corresponding pixel in the anti-contouring layers with respect to a maximum of ink pixels determined to be printed on top of each other in the anti-contouring layers.

In a seventh step S7 the print controller determines at least one overcoat layer of varnish ink for printing on top of the at least one colour ink layer.

In a final eighth step S8 the print head assembly subsequently printing the elevation layers, the anti-contouring layers, the white layers, the at least one colour ink layer and the at least one overcoat layer on the print media, and the print head assembly printing the multiple inverse anti-contouring layers between the at least one colour ink layer and the at least one overcoat layer.

The method ends in an end point B.

The steps S2 - S7 may be changed in any order.

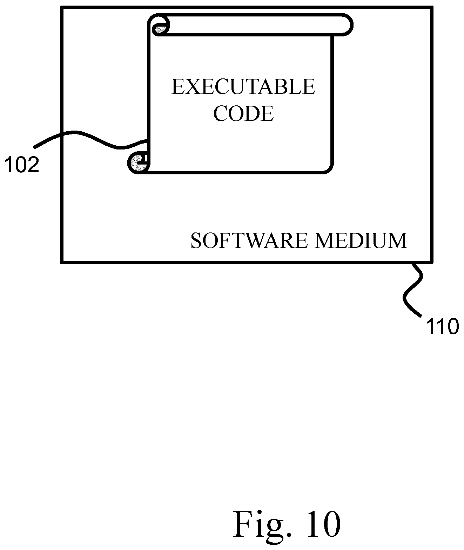

Fig. 10 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 6 or 7 and/or according to any of the variants and modifications of the printer and/or of the method described hereinbefore.

The non-transitory software medium 110 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

The skilled person will recognise that other embodiments are possible within the scope of the appended claims.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for a UV curable printer (5) comprising a medium support surface (11) for supporting the print media, a print head assembly for ejecting UV curable colour inks (CMYK), white inks (W) and varnish ink (V) forming a print on the print media and a print controller for controlling the printing of images on the print media in multiple layers, the method comprising the steps of
- the print controller receiving a print job comprising a colour image, a height image with height information per pixel of the colour image and a gloss image with gloss information per pixel of the colour image,
- the print controller determining elevation layers to get a height per pixel according to the height image,
- the print controller determining anti-contouring layers to avoid contouring artefacts in the print,
- the print controller determining white layers to be a base for printing the colour image,
- the print controller determining at least one colour ink layer for printing the colour image,
- the print controller determining at least one overcoat layer of varnish ink (V) for printing on top of the at least one colour ink layers,
- the print head assembly subsequently printing the elevation layers, the anti-contouring layers, the white layers, the at least one colour ink layers and the at least one overcoat layer on the print media,
wherein the method comprises the steps of
- the print controller creating multiple inverse anti-contouring layers, wherein each pixel value of the multiple inverse anti-contouring layers is a complementary value of the corresponding pixel in the anti-contouring layers with respect to a maximum of ink pixels determined to be printed on top of each other in the anti-contouring layers, and
- the print head assembly printing the multiple inverse anti-contouring layers between the at least one colour ink layer and the at least one overcoat layer.

2. A method according to claim 1, wherein the method comprises the step of the print head assembly printing pixels in the anti-contouring layers with no ink, white ink (W) or varnish ink (V) or colour ink.

3. A method according to claim 1 or 2, wherein the method comprises the step of printing pixels in the multiple inverse anti-contouring layers with no ink, with the varnish ink (V) or with an appropriate colour ink.

4. A method according to claim 3, wherein the method comprises the step of printing pixels in the multiple anti-contouring layers and/or the inverse anti-contouring layers at least partially with no ink pixels such that the print has an approximately equal surface.

5. A method according to any of the preceding claims, wherein the method comprises the step of determining the number of anti-contouring layers and the number of overcoat layers in order to let a gloss of the print match the gloss information of each pixel of the gloss image.

6. A method according to any of the preceding claims, wherein the preferred number of inverse anti-contouring layers equals the number of anti-contouring layers.

7. A method according to any of the preceding claims, wherein the method comprises the step of splitting the at least one colour ink layer into multiple colour ink layers.

8. A UV curable printer (5) comprising a medium support surface (11) for supporting print media to be printed upon, a print head assembly for ejecting colour inks (CMYK), white inks (W) and varnish ink (V) forming a print on the print media and a print controller for controlling the printing of a colour image on the print media in multiple layers as to form the print, wherein the print controller is configured to perform the steps of a method according to any of the preceding claims.

9. A non-transitory software medium comprising executable program code configured to, when executed on a print controller of a printer, enable the print controller to perform the steps of the method according to any of the claims 1 - 7.
